# EUROPEAN PATENT SPECIFICATION

(11) **EP 0 999 967 B1**
(45) Date of publication and mention of the grant of the patent: **23.05.2001**
(21) Application number: 98937863.3
(22) Date of filing: 29.07.1998
(51) Int. Cl.: B62B 5/04, B60B 33/02

(54) **UNDERFRAME FOR A CART, IN PARTICULAR FOR A TROLLEY, AND A CART PROVIDED WITH SUCH AN UNDERFRAME**
WAGENFAHRGESTELL, INSBESONDERE FüR EINEN SERVIERWAGEN UND EIN MIT EINEM DERARTIGEN FAHRGESTELL VERSEHENER WAGEN
CHASSIS POUR UN CHARIOT, EN PARTICULIER UN CHARIOT DE SERVICE, ET CHARIOT DOTE DUDIT CHASSIS

(30) Priority: 29.07.1997 NL 1006682
(43) Date of publication of application: 17.05.2000
(73) Proprietor: Driessen Aircraft Holding B.V., 1770 AA Wieringerwerf (NL)
(72) Inventor: VAN LOON, Laurentius, Petrus, Joseph, NL-1774 AK Slootdorp (NL); PORTEGIES, Cornelis, Petrus, Maria, NL-1679 VD Midwoud (NL)
(74) Representative: Jorritsma, Ruurd
(86) International application number: NL9800432
(87) International publication number: WO9906260

(56) References cited:
- EP-A- 0 447 863
- EP-A- 0 678 438
- DE-A- 2 002 978
- US-A- 4 526 253
- US-A- 5 579 871

## Description

The invention relates to an underframe for a cart, comprising a baseplate with two longitudinal sides and two transverse sides, four castors which are fixed to the baseplate by means of a fixing element, along each longitudinal side at least one castor being provided with a brake which has a spring pawl for blocking the rotation of the castor, and comprising at least one pair of pedals along one of the transverse sides, and two control elements which run along the longitudinal sides and are each connected to a respective brake and a respective pedal, the control elements near at least one of the transverse sides being interconnected by means of a swivel arm which is pivotable about a shaft situated at right angles to the baseplate, wherein the control elements are situated above the castors and are provided with a cam which on operation of a first pedal can be taken above the spring pawl and by operation of the second pedal releases the spring pawl.

An airline trolley provided with such an underframe is manufactured by the Swiss company Bucher and is described in EP-A-0,678,438.

When a trolley is being moved along the aisle of an aircraft or the corridor of a train, the brakes are blocked while the trolley is stationary, in order to prevent the trolley from moving. For this purpose, a first pedal is foot-operated and the swivel arm is rotated, so that a first control element, in the form of a strip running in the lengthwise direction of the trolley, is moved towards the transverse side, while at the same time the second control element is moved away from the transverse side by rotation of the swivel arm. The strip-shaped control elements run alongside the castors in this case. An arm which rotates an annular brake mechanism of the castors is connected to each strip-shaped control element. The annular brake mechanism is provided with a cam and with a separate lip which, through rotation of the ring with the cam, is brought into engagement with a spring pawl of the castor brake. The lip is pressed against the spring pawl by the upgoing side of the cam, and the rotation of the castors is blocked.

When the second pedal is depressed with the foot, the swivel arm is rotated in the opposite direction and the strip-shaped control elements move in an opposite direction. This causes the annular brake mechanisms to rotate in the opposite direction, and the spring pawl of each castor is released, so that the trolley can be moved again.

A disadvantage of the known device is that the coupling between the control strips and the brake of each castor is relatively fragile. The same applies to the coupling of the swivel arm to the control strips. Since carts, such as trolleys, are exposed to very rough treatment while they are being loaded into and unloaded from aircraft or trains and while they are being cleaned in an automatic wash, the underframe must be of a very sturdy design.

From figures 11a and 11b of EP-A-0,678,438 an embodiment is known wherein the control element directly engages with a brake above the castor. Although this is a more sturdy construction, the swivel arms connecting the control means are abutting against the end faces of the control means or project into a recess at the end of the control means, which forms a relatively vulnerable construction.

It is therefore an object of the present invention to provide an underframe in which a minimum of moving parts is used, which is very simple in design, is very lightweight and takes up very little space at the underside of the underframe. It is a further object of the present invention to provide an underframe which is very reliable in operation and is maintenance-free.

To this end, the underframe according to the present invention is characterized in that the control elements are each provided with a transverse arm, the transverse arms extending along a transverse side to the swivel arm and being connected by one end to the swivel arm.

With this design, a simple and sturdy connection of the control elements to the swivel arm situated near the pedals is obtained. According to the invention, the longitudinal strips and the transverse arms of the control elements are situated near the edges of the underframe, and the strips and the transverse arms are protected by the edges. The central part of the underframe of the trolley according to the invention is free from moving parts so that the risk of contact with objects lying on the ground, and of damage occurring in the process, is avoided.

Because no moment is exerted on parts of the brake, the latter cannot be damaged as a result. The brakes according to the invention are operated and released by a simple to and fro movement of the strips. Owing to the fact that the strips are confined between the fixing plate of the castors and the baseplate of the underframe, separate fixing brackets are not necessary, and there is no need to fit a separate section in the baseplate, in order to retain and guide the control elements.
The device according to the invention can be made very light and produces a considerable weight saving compared with the present underframe of applicants. This is of very great importance, in particular if the underframe is being used for airline trolleys, in which case a large quantity of fuel can be saved by the weight reduction of the underframe.

It should be pointed out that an airline trolley in which control strips for the brakes of the castors run along the top of the castors is also known from US Patent No. 5,579,871. In the design described therein the control strips are moved to and fro by two central rods, each connected by their ends to a respective pedal. Situated parallel to these central rods are the control strips, which are connected to the rods by means of a central swivel arm provided with two wings. The known device again comprises a relatively large number of parts and has a relatively great susceptibility to faults. Moreover, the control strips are subjected to compressive stress during the to and fro movement, which again can lead to the occurrence of faults. In one embodiment the transverse arms are connected to the swivel arm by means of a slit, in which a pin of the swivel arm is situated. In a preferred embodiment a swivel arm and a pair of pedals are situated on each transverse side of the underframe. In the case of such a design a closed loop is formed by the swivel arms and the control elements, the control elements moving in the opposite direction when one pedal is operated. The control elements here are subjected to a tensile force, so that accurate and fault-free guidance along the top side of the castors is possible.

An embodiment of a trolley with an underframe according to the present invention will be explained with reference to the appended drawing, in which:
Figure 1 shows a perspective view of a trolley with an underframe according to the present invention;
Figure 2 shows a bottom view of the underframe of the trolley according to Figure 1; and
Figures 3 and 4 show a cut-away partial side view of an underframe according to the present invention, in the released position and in the blocked position, respectively.

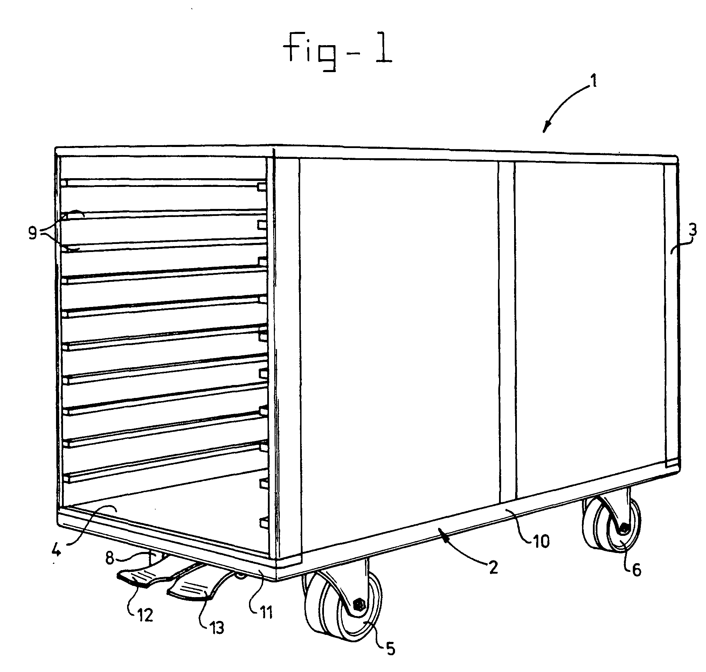

Figure 1 shows a cart or trolley 1 according to the present invention which is suitable for applications in air travel or in trains. The trolley 1 comprises an underframe 2 and a body 3 placed thereon. The underframe 2 is formed, for example, by an aluminium baseplate 4, on which four castors 5, 6, 7 and 8 are fixed. The body 3 is made of aluminium sections with panels of a laminated material of foam and aluminium in between.
Supporting ribs 9 are fitted against the wall panels in the inside of the trolley, in order to support serving trays with food.

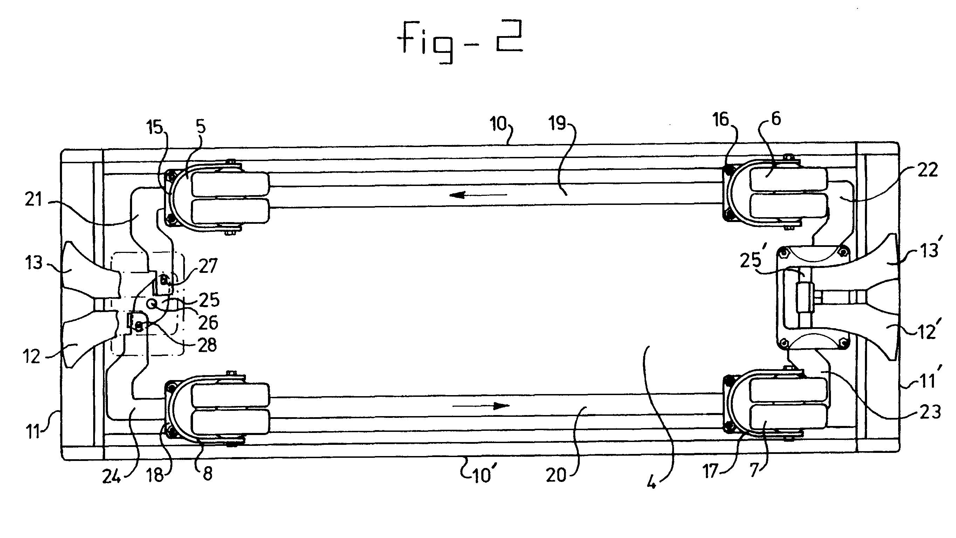

As can be seen from Figure 2, the underframe 2 is provided with longitudinal sides 10, 10' and transverse sides 11, 11'. A pair of pedals 12, 13; 12', 13' is fitted along both transverse sides 11, 11'. The castors 5-8 are released by operating the pedal 12 with the foot, and the rotation of the castors is blocked by depressing the pedal 13 with the foot.

As can be seen clearly from Figure 2, the castors 5, 6, 7 and 8 are fixed on the baseplate 4 by means of a fixing plate 15, 16, 17 and 18. Two control strips 19 and 20 run between the fixing plates 15-18 and the baseplate 4. The control strips 19 and 20 are connected to swivel arms 25, 25' by means of transverse arms 21, 22, 23 and 24. The swivel arm 25, 25' is rotatable about a shaft 26 situated at right angles to the baseplate 4. At each end the swivel arm 25, 25' comprises a pin 27, 28, which is accommodated in a slit on the end of each transverse arm 21-24 in such a way that it can slide to and fro. The transverse arm 24 can be drawn towards the transverse side 11 by operating the pedal 12. In this process the swivel arm 25, 25' tilts about the shaft 26 to the position shown in Figure 2. This causes the control strips 19 and 20 to be moved in a direction opposite to the direction of the arrows shown on the strips 19 and 20 in Figure 2. By operation of the pedal 13, the transverse arm 21 is drawn towards the side edge 11, and the swivel arm 25 is tilted. As a result, the control strips 19 and 20 will move in the direction of the arrows, as shown in Figure 2.

The swivel arm 25' is connected to pedals 12' 13' in the same way as the swivel arm 25, and is situated underneath a protection cap, so that this swivel arm is not visible in the figure.

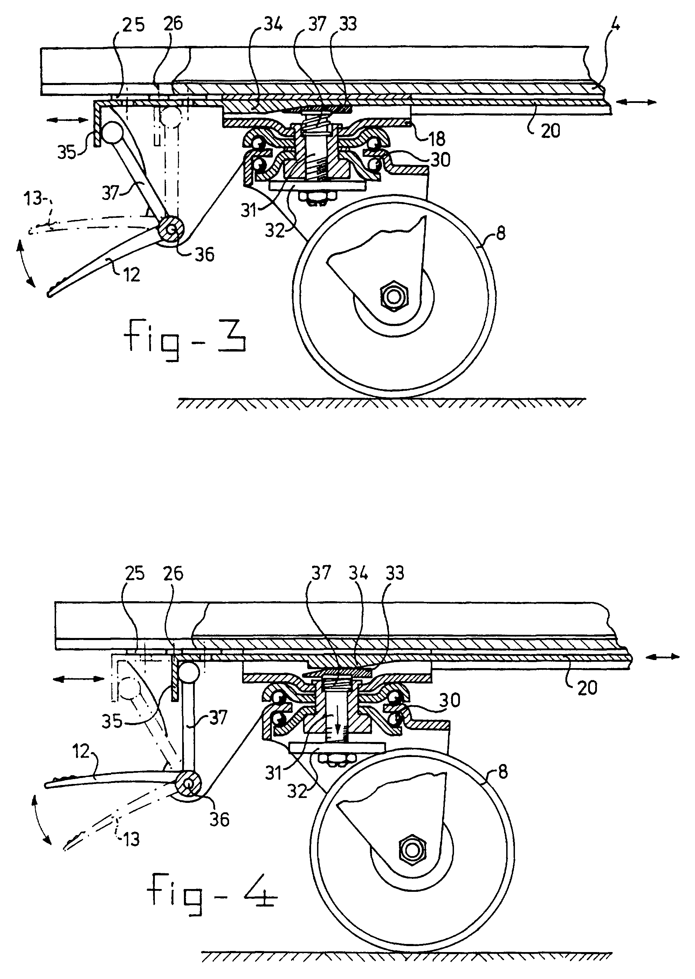

As shown in Figures 3 and 4, the castor 8 is rotatably connected to the fixing plate 18 by means of a bearing 30. This means that the castor 8 can rotate freely about a central axis formed by a spring pawl 31. The spring pawl 31 is provided at its end with a brake disc 32, for acting upon the running tread of the castor 8. A wedge-shaped plastic cam 33 is situated at the end of the spring pawl 31. A chamfered cam 34, which can move along the plastic cam 33 and interacts with the plastic cam 33, is fitted on the control strip 20. The strip 20 is provided at its end with a lip 35 which is situated at right angles to the strip. The pedal 12 is rotatable about a shaft 36 which runs substantially parallel to the transverse side 11. A transverse arm 37 is connected to the pedal 12 and acts upon the lip 35 of the control strip 20. When the pedal 12 is depressed, the result is that the control strip 20 is moved to the left by the transverse arm 37, and the spring pawl 31 is released, as shown in Figure 3. In this process the pedal 13 is taken by the swivel arm 25 into its position shown by a dotted line, and the lip of the control strip 19 is moved to the right relative to the lip 35, to a position shown by a dotted line.

When the pedal 13 is operated, as shown in Figure 4, the transverse arm 21 of the pedal 13 moves to the left, and the control strip 20 in Figure 4 is drawn to the right by the swivel arm 25. This takes the cam 34 above the spring pawl 31, which is consequently pressed down, so that the brake disc 32 is pressed against the running tread of the castor 8. As a result, the rotation of the castor 8 is blocked. When pedal 12 is operated again, as shown in Figure 4, the control strip 20 is moved to the left again, and the spring pawl 31 is pressed upwards under the action of the spring force of the spring 37, so that the castor 8 is released again, as shown in Figure 3.

Although the invention has been described with reference to an embodiment of an underframe which is provided with four pedals, the invention, however, also relates to an underframe in which a pair of pedals 12, 13 is present at only one transverse side.

Further variants of the underframe according to the invention will be clear to the person skilled in the art and fall within the scope of the appended claims.

## Claims

1. Underframe (2) for a cart (1), comprising a baseplate (4) with two longitudinal sides (10, 10') and two transverse sides (11, 11'), four castors (5, 6, 7, 8) which are fixed to the baseplate (4) by means of a fixing element (15, 16, 17, 18), along each longitudinal side (10, 10') at least one castor being provided with a brake which has a spring pawl (31) for blocking the rotation of the castor, and comprising at least one pair of pedals (12, 13; 12', 13') along one of the transverse sides (11, 11'), and two control elements (19, 20) which run along the longitudinal sides and are each connected to a respective brake and a respective pedal (12, 13; 12', 13'), the control elements (19, 20) near at least one of the transverse sides (11, 11') being interconnected by means of a swivel arm (25, 25') which is pivotable about a shaft (26) situated at right angles to the baseplate (4), wherein the control elements (19, 20) are situated above the castors (5, 6, 7, 8), and are provided with a cam (34) which on operation of a first pedal (13, 13') can be taken above the spring pawl (31) and by operation of the second pedal (12, 12') releases the spring pawl (31), characterised in that the control elements (19, 20) are each provided with a transverse arm (21, 22, 23, 24), the transverse arms (21, 22, 23, 24) extending along a transverse side (11, 11') to the swivel arm (25, 25') and being connected by one end to the swivel arm (25, 25').

2. Underframe (2) according to Claim 1, characterized in that the transverse arms (21, 22, 23, 24) are provided at their end with a slit, or a pin which interacts with a pin (27, 28) or a slit of the swivel arm (25, 25').

3. Underframe (2) according to Claim 1 or 2, characterized in that each transverse arm (21, 22, 23, 24) is provided at its end with a lip (35) extending at right angles to the baseplate, the pedals (12, 13; 12', 13) being swivellable about a shaft (36) situated in the direction of the transverse sides (11, 11') and comprising an arm (37) which rests against the lip (35) of the respective transverse arm (21, 22, 23, 24), in order to exert a tensile force on the lip (35).

4. Underframe (2) according to one of the preceding claims, characterized in that a swivel arm (25, 25') and a pair of pedals (12, 13, 12', 13') are fitted on each transverse side (11, 11').

5. Cart (1) provided with an underframe (2) according to one of the preceding claims.

## Patentansprüche

1. Untergestell (2) für einen Wagen (1), das eine Grundplatte (4) mit zwei Längsseiten (10,10') und zwei Querseiten (11,11'), vier Laufrollen (5,6,7,8), die über ein Befestigungselement (15,16,17,18) an der Grundplatte (4) befestigt sind, wobei an jeder Längsseite (10,10') wenigstens eine Laufrolle mit einer Bremse versehen ist, die eine Federklinke (31) aufweist, die die Drehung der Laufrolle verhindert, und wenigstens ein Paar Pedale (12,13;12',13') an einer der Querseiten (11,11') umfasst, sowie zwei Steuerelemente (19,20) umfasst, die an den Längsseiten verlaufen und jeweils mit einer entsprechenden Bremse und einem entsprechenden Pedal (12,13;12',13') verbunden sind, wobei die Steuerelemente (19,20) in der Nähe wenigstens einer der Querseiten (11,11') über einen Schwenkarm (25,25') miteinander verbunden sind, der um eine Welle (26) geschwenkt werden kann, die im rechten Winkel zu der Grundplatte (4) angeordnet ist, wobei sich die Steuerelemente (19,20) über den Laufrollen (5,6,7,8) befinden und mit einem Nocken (34) versehen sind, der bei Betätigung eines ersten Pedals (13,13') über die Federklinke (31) gebracht werden kann und bei Betätigung des zweiten Pedals (12,12') die Federklinke (31) freigibt, **dadurch gekennzeichnet,** dass die Steuerelemente (19,20) jeweils mit einem Querarm (21,22,23,24) versehen sind, wobei sich die Querarme (21,22,23,24) an einer Querseite (11,11') zu dem Schwenkarm (25,25') erstrecken und an einem Ende mit dem Schwenkarm (25,25') verbunden sind.

2. Untergestell (2) nach Anspruch 1, **dadurch gekennzeichnet,** dass die Querarme (21,22,23,24) an ihrem Ende mit einem Schlitz oder einem Zapfen versehen sind, der mit einem Zapfen (27,28) bzw. einem Schlitz des Schwenkarms (25,25') zusammenwirkt.

3. Untergestell (2) nach Anspruch 1 oder 2, **dadurch gekennzeichnet,** dass jeder Querarm (21,22,23,24) an seinem Ende mit einem Ansatz (35) versehen ist, der im rechten Winkel zu der Grundplatte verläuft, wobei die Pedale (12,13;12',13') um eine Welle (36) herum geschwenkt werden können, die in der Richtung der Querseiten (11,11') angeordnet ist und einen Arm (37) umfasst, der an dem Ansatz (35) des entsprechenden Querarms (21,22,23,24) anliegt, um eine Zugkraft auf den Ansatz (35) auszuüben.

4. Untergestell (2) nach einem der vorangehenden Ansprüche, **dadurch gekennzeichnet,** dass ein Schwenkarm (25,25') sowie ein Paar Pedale (12,13;12',13') an jeder Querseite (11,11') angebracht sind.

5. Wagen (1), der mit einem Untergestell (2) nach einem der vorangehenden Ansprüche versehen ist.

## Revendications

1. Châssis (2) pour un chariot (1), comprenant une plaque de base (4) comportant deux côtés longitudinaux (10,10') et deux côtés transversaux (11,11'), quatre roulettes (5,6,7,8) qui sont fixées à la plaque de base (4) au moyen d'un élément de fixation (15,16,17,18), au moins une roulette le long de chaque côté longitudinal (10,10') étant pourvue d'un frein qui possède un cliquet à ressort (31) pour bloquer la rotation de la roulette, et comprend au moins une paire de pédales (12,13; 12',13'), le long d'un des côtés transversaux (11,11'), et deux éléments de commande (19,20), qui s'étendent le long des côtés longitudinaux et sont raccordés chacun à un frein respectif et à une pédale respective (12,13; 12',13'), les éléments de commande (19,20) étant interconnectés, à proximité d'au moins l'un des côtés transversaux (11,11'), par un bras pivotant (25,25'), qui peut pivoter autour d'un arbre (26) perpendiculaire à la plaque de base (4), les éléments de commande ' (19,20) étant situés au-dessus des roulettes (5,6,7,8) et étant équipés d'une came (34) qui, lors de l'actionnement d'une première pédale (13,13'), peut être amenée au-dessus du cliquet à ressort (31) et, sous l'action de la seconde pédale (12,12'), libère le cliquet à ressort (31),
caractérisé en ce que les éléments de commande (19,20) sont pourvus chacun d'un bras transversal (21,22,23,24), les bras transversaux (21,22,23,24) s'étendant le long d'un côté transversal (11,11') jusqu'au bras pivotant (25,25') et étant connectés par une extrémité au bras pivotant (25,25').

2. Châssis (2) selon la revendication 1, caractérisé en ce que les bras transversaux (21,22,23,24) sont pourvus, à leur extrémité, d'une fente ou d'une tige qui coopère avec une tige (27,28) ou une fente du bras pivotant (25,25').

3. Châssis (2) selon la revendication 1 ou 2,
caractérisé en ce que sur chaque bras transversal (21,22, 23,24) est disposé, au niveau de son extrémité, un rebord (35) qui s'étend à angle droit par rapport à la plaque de base, les pédales (12,13; 12',13') pouvant pivoter autour d'un arbre (36) qui s'étend dans la direction des côtés transversaux (11,11') et comprenant un bras (37) qui est en appui contre le rebord (35) du bras transversal respectif (21,22,23,24) pour appliquer une force de traction au rebord (35).

4. Châssis (2) selon l'une des revendications précédentes, caractérisé en ce qu'un bras pivotant (25,25') et une paire de pédales (12,13,12',13') sont montés sur chaque côté transversal (11,11').

5. Chariot (1) pourvu d'un châssis (2) selon l'une des revendications précédentes.
